# EUROPÄISCHE PATENTSCHRIFT

(11) **EP 1 297 698 B1**
(45) Veröffentlichungstag und Bekanntmachung des Hinweises auf die Patenterteilung: **14.06.2006**
(21) Anmeldenummer: 01940211.4
(22) Anmeldetag: 08.05.2001
(51) Int. Cl.: H04N 7/14

(54) **TELEKOMMUNIKATIONSENDGERÄT MIT EINER KAMERA**
TELECOMMUNICATION TERMINAL WITH A CAMERA
TERMINAL DE TELECOMMUNICATION DOTE D'UNE CAMERA

(30) Priorität: 21.06.2000 DE 10030403
(43) Veröffentlichungstag der Anmeldung: 02.04.2003
(73) Patentinhaber: ROBERT BOSCH GMBH, 70442 Stuttgart (DE)
(72) Erfinder: SCHMIDT, Gunnar, 38304 Wolfenbuettel (DE); DUERING, Mark, 31195 Lamspringe (DE); WITTENBERG, Henning, 90419 Nürnberg (DE)
(86) Internationale Anmeldenummer: PCT/DE2001/001733
(87) Internationale Veröffentlichungsnummer: WO 2001/099420

(56) Entgegenhaltungen:
- EP-A- 0 550 172
- WO-A-00/04715

## Beschreibung

### Stand der Technik

Es sind bereits Telekommunikationsendgeräte mit einer Kamera bekannt, beispielsweise in vorhandenen Festnetzen oder auch Endgeräte zur Benutzung in Mobilfunksystemen. Hierbei dient die Kamera dazu, das Bild des Benutzers des Telekommunikationsendgerätes, beispielsweise beim Telefonieren, aufzunehmen und die Videoinformationen dem Telekommunikationsteilnehmer bzw. den Telekommunikationsteilnehmern zur Verfügung zu stellen (Bildtelefonie).

Die EP-A 550 172 zeigt die Positionierung einer Videokamera, welche auf jeder Seite der Kamera mit LED's ausgestattet ist. Die Einstellung der Kamera erfolgt derart, dass die LED's sichtbar sind, wenn das aufzunehmende Objekt sich außerhalb des Kamerabereichs befindet.

Die WO-A 00/04715 zeigt ein Telekommunikationsendgerät, welches eine Kamera und einen aufklappbaren Spiegel umfasst. Die aufzunehmende Person kann anhand von Markierungen auf dem Spiegel diesen geeignet einstellen und zwar derart, dass die Markierungen zur Deckung gebracht werden müssen, um eine optimale Position des aufzunehmenden Objekts in Bezug zur Kamera zu gewährleisten.

### Vorteile der Erfindung

Das Telekommunikationsendgerät mit den Merkmalen des Hauptanspruchs hat demgegenüber den Vorteil, daß keine Darstellung des Eigenbildes, beispielsweise auf einem Display, notwendig ist. Vielmehr erkennt ein Benutzer des Telekommunikationsendgerätes anhand der Markierung, ob er von der Kamera seines Telekommunikationsgerätes erfaßt wird und somit seinem Gesprächspartner ein korrektes Videosignal übermittelt werden kann. Hierdurch ist es möglich, auf ein zweites Display bzw. eine zweite Anzeigevorrichtung zur Darstellung des Eigenbildes zu verzichten oder aber, falls die Darstellung des Eigenbildes auf einem Teilbereich eines einzigen vorhandenen Displays vorgenommen wurde, diesen Teilbereich des Displays auch für die Darstellung des

Kommunikationspartners zu verwenden. Ebenso kann beim erfindungsgemäßen Telekommunikationsgerät auf einen Spiegel, der das von der Kamera aufgenommene Eigenbild des Benutzers dem Benutzer wiedergibt bzw. auf einen halbdurchlässigen Spiegel, hinter dem sich die Kamera befindet, verzichtet werden. Hierdurch ist das Telekommunikationsendgerät einfacher, leichter, kleiner und kostengünstiger herzustellen und zu benutzen.

Weiterhin ist von Vorteil, daß das Telekommunikationsendgerät ein Gehäuse umfaßt, wobei die wenigstens eine Markierung als eine im Gehäuse versenkte Stelle vorgesehen ist, die nur von Punkten aus einsehbar ist, die sich im von der Kamera erfaßten Winkelbereich befinden. Dadurch ist mit sehr einfachen Mitteln eine Markierung, die den von der Kamera erfaßten Winkelbereich anzeigt, darstellbar.

Weiterhin ist von Vorteil, daß die Stelle farblich abgesetzt oder selbstleuchtend vorgesehen ist. Dadurch ist der Fall, daß sich der Benutzer im von der Kamera erfaßten Winkelbereich aufhält, für diesen leicht und eindeutig erkennbar, insbesondere auch im Dunkeln, wenn die Stelle selbstleuchtend vorgesehen ist bzw. wenn diese in einem geeigneten phosphoreszierenden Material vorgesehen ist.

Weiterhin ist von Vorteil, daß die wenigstens eine Markierung anzeigt, wo sich der von der Kamera erfaßte Winkelbereich befindet. Damit ist es für einen Benutzer des Telekommunikationsendgerätes einfacher, sich relativ zum von der Kamera erfaßten Winkelbereich zu orientieren bzw. "zu justieren", da der Benutzer durch die Markierung einen Hinweis darüber erhält, wo sich der von der Kamera erfaßte Winkelbereich befindet. Dies kann indirekt auch dadurch geschehen, daß die Markierung dem Benutzer anzeigt, wo sich der von der Kamera erfaßte Winkelbereich nicht befindet.

Weiterhin ist von Vorteil, daß mehrere Markierungen vorgesehen sind. Dadurch ist durch die "Einstellung" der Position des Benutzers relativ zum von der Kamera erfaßten Winkelbereich bei mehreren Markierungen eine leichtere Einstellung erreichbar bzw. die richtige Einstellung leichter erkennbar.

### Zeichnung

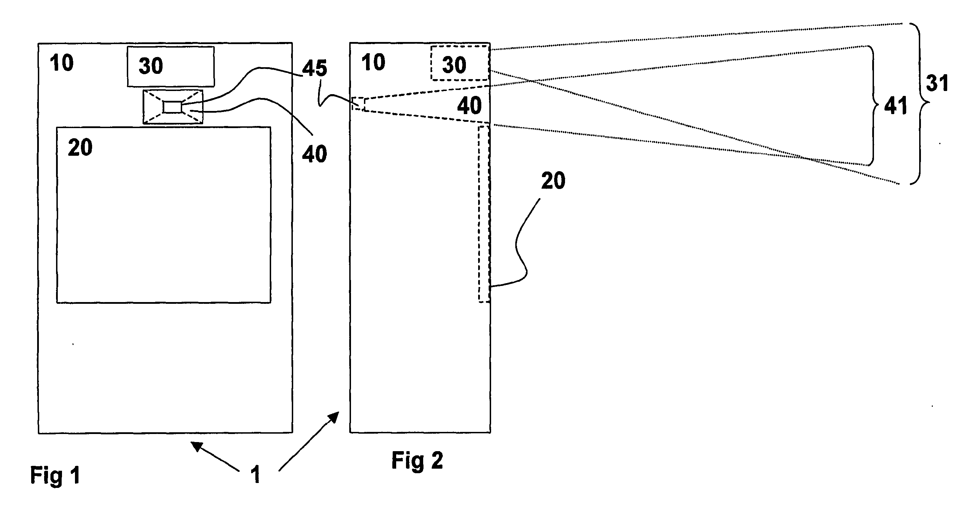

Ein Ausführungsbeispiel der Erfindung ist in der Zeichnung dargestellt und in den nachfolgenden Beschreibungen näher erläutert. Es zeigen Figur 1 ein erfindungsgemäßes Telekommunikationsendgerät mit einer Kamera in Draufsicht,
Figur 2 das in Figur 1 dargestellte Telekommunikationsendgerät in Seitenansicht und
Figur 3 in Seitenansicht das Telekommunikationsendgerät mit zwei Markierungen.

### Beschreibung des Ausführungsbeispiels

In Figur 1 ist ein erfindungsgemäßes Telekommunikationsendgerät 1 mit einer Kamera 30 dargestellt. Das Telekommunikationsendgerät 1 ist insbesondere als schnurloses Telekommunikationsendgerät, insbesondere als Funktelefon, Mobiltelefon, Handy und dergleichen vorgesehen. Daher wird im folgenden auch das Telekommunikationsendgerät 1 als Funktelefon 1 bezeichnet. Das Funktelefon 1 umfaßt ein Gehäuse 10 und in der Regel auch eine Anzeigevorrichtung 20, wobei die Anzeigevorrichtung 20 nicht erfindungswesentlich ist. Im allgemeinen umfassen Funktelefone auch Eingabevorrichtungen, wie beispielsweise Tasten und ähnliches, die in den Zeichnungen nicht dargestellt sind. Ebenso ist eine bei Funktelefonen in der Regel vorhandene Antenne nicht dargestellt.

In Figur 2 ist das erfindungsgemäße Telekommunikationsendgerät 1 in Seitenansicht dargestellt, während dem es in Figur 1 in Aufsicht dargestellt ist. Wiederum ist das Gehäuse 10 des Telekommunikationsendgerätes 1, die Kamera 30, die Anzeigevorrichtung 20, die Markierung 45 und der Versenkungskanal 40 erkennbar. Durch den Versenkungskanal 40 ist die Markierung 45 nicht von jedem Punkt außerhalb des Telekommunikationsendgerätes 1 sichtbar, sondern es existiert ein besonderer Winkelbereich 41, der diejenigen Punkte umfaßt, von denen aus die Markierung 45 erkennbar ist. In der Seitenansicht wird besonders deutlich, daß durch die sich zur Markierung 45 hin verjüngende Form des Versenkungskanals 40 der besondere Winkelbereich 41 definiert wird. Durch entsprechende Formgebung des Versenkungskanals 40 innerhalb des Gehäuses 10 kann somit der besondere Winkelbereich 41 beliebig verändert werden. Es ist darüber hinaus vorsehbar, insbesondere dann, wenn der von der Kamera erfaßte Winkelbereich 31 änderbar vorgesehen ist, eine ebensolche Änderung auch für den besonderen Winkelbereich 41 durch Veränderung des Versenkungskanals 40 und der Markierung 45 zu erreichen.

Die Kamera 30 des Funktelefons 1 zeichnet die Videoinformationen auf, die beim Betrieb des Telekommunikationsendgerätes 1 einem Telekommunikationsteilnehmer, insbesondere Gesprächspartner, des Benutzers des Telekommunikationsendgerätes 1 übermittelt werden. Hierbei definiert die Kamera 30 einen bestimmten Winkelbereich 31, der von der Kamera erfaßt wird. Insbesondere ist der von der Kamera erfaßte Winkelbereich 31 durch ein optisches System in der Kamera 30 begrenzt. Das erfindungsgemäße Funktelefon 1 wird beim Betrieb von seinem Benutzer in der Regel so gehalten, daß die Oberseite des Funktelefons 1 dem Gesicht des Benutzers gegenüberliegt, was dazu führt, daß die vom (entfernten) Telekommunikationsteilnehmer seinerseits zum Funktelefon 1 übermittelten Bildinformationen leicht auf der Anzeigevorrichtung 20 eingesehen werden können. In der Regel wird das Funktelefon 1 auch in einem bestimmten üblichen Abstand in der Regel vor dem Gesicht des Benutzers gehalten. Der von der Kamera erfaßte Winkelbereich 31 ist nun so ausgelegt, daß das erfindungsgemäße Telekommunikationsendgerät 1 für die übliche Benutzung gut geeignet ist.

Das Funktelefon 1 umfaßt weiterhin eine Markierung 45, die einem Benutzer den von der Kamera erfaßten Winkelbereich 31 anzeigt. In besonders einfacher Weise kann eine solche Markierung dadurch realisiert werden, daß die Markierung 45 im Gehäuse 10 des Telekommunikationsendgerätes 1 versenkt angeordnet ist. Hierzu ist ein, insbesondere konisch ausgebildeter Versenkungskanal 40 vorgesehen, in dem sich die Markierung 45 befindet. Die Markierung 45 und der Versenkungskanal 40 sind erfindungsgemäß so in das Gehäuse 10 des Telekommunikationsendgerätes 1 relativ zur Position der Kamera 30 und des von ihr erfaßten Winkelbereichs 31 integriert, daß sich der besondere Winkelbereich 41 und der von der Kamera erfaßte Winkelbereich 31 bei üblicher Benutzung des Telekommunikationsendgerätes, d. h. insbesondere für den Bereich der üblichen Entfernung zwischen Telekommunikationsendgerät 1 und dem Gesicht des Benutzers zu großen Teilen überdecken. Dadurch ist gewährleistet, daß der Benutzer die Markierung 45 erkennt, wenn sich sein Gesicht in dem von der Kamera erfaßten Winkelbereich 31 befindet und umgekehrt, daß er sich in dem von der Kamera erfaßten Winkelbereich 31 befindet, wenn er die Markierung 45 sieht. Dadurch ist es dem Benutzer auf einfache Weise möglich, zu erkennen, ob ihn die Kamera erfaßt oder nicht. Der Benutzer ist somit in der Lage, seinem Kommunikationspartner stets ein korrektes Eigenbild zu senden und nicht immer nur beispielsweise die rechte bzw. linke Gesichtshälfte oder ähnliches.

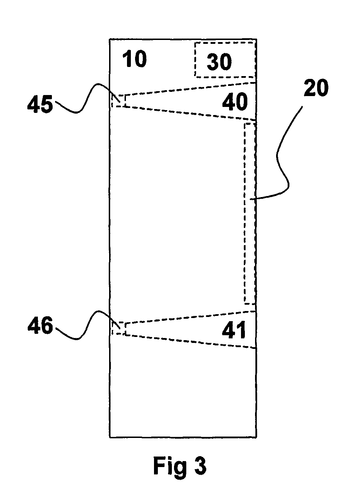

In Figur 3 ist das Telekommunikationsendgerät 1 mit zwei Markierungen, der ersten Markierung 45 und einer weiteren Markierung 46 dargestellt. Entsprechend umfaßt das Telekommunikationsendgerät 1 in Figur 3 den Versenkungskanal 40 und einen weiteren Versenkungskanal 41. Weiterhin ist in Figur 3 wieder die Anzeigevorrichtung 20 und die Kamera 30 dargestellt. Die Versenkungskanäle 40, 41 und die Markierungen 45, 46 sind in Figur 3 erfindungsgemäß insbesondere so im Gehäuse 10 des Telekommunikationsendgerätes 1 angeordnet, daß ein Benutzer des Telekommunikationsendgerätes beide Markierungen 45, 46 erkennt, wenn er das Telekommunikationsendgerät 1 von einem Punkt innerhalb des von der Kamera erfaßten Winkelbereichs 41 sieht. Dadurch ist es leichter, den von der Kamera erfaßten Winkelbereich 31 zu erkennen, da mehrere Markierungen sichtbar sind. Entsprechend können erfindungsgemäß auch eine größere Anzahl von Markierungen als zwei vorgesehen sein.

Der wesentliche Vorteil des erfindungsgemäßen Telekommunikationsendgerätes besteht darin, daß das Eigenbild, das von der Kamera 30 aufgenommen wird, nicht dargestellt werden muß und somit die Anzeigevorrichtung 20 kleiner und damit preiswerter ausgeführt werden kann. Wenn die Markierung 45 beispielsweise im oberen Bereich des Funktelefons 1 und die weitere Markierung 46 beispielsweise im unteren Bereich des Funktelefons 1 angebracht ist, dann zieht der Benutzer aus der Information, daß er nur die obere Markierung 45 sieht, den Schluß, daß er sich weiter nach unten bewegen muß, so daß er auch die untere Markierung 46 erkennen kann. Entsprechend entnimmt der Benutzer aus der Information, daß lediglich die untere Markierung 46 sichtbar ist, daß er sich nach oben bewegen muß, um in den von der Kamera 30 erfaßten Winkelbereich 31 zu gelangen. Beim Vorhandensein von drei Markierungen, die beispielsweise ein Dreieck bilden, können dem Benutzer durch die Markierungen auch eine Information über die seitliche Ausrichtung des Funktelefons 1 gegeben werden.

Weiterhin können die Markierungen 45, 46 auch als Pfeile ausgeführt werden, so daß sich auch hieraus eine Information ergibt, in welchem Bereich sich der von der Kamera erfaßte Winkelbereich 31 befindet.

## Patentansprüche

1. Telekommunikationsendgerät mit einer Kamera, welches wenigstens eine Markierung umfasst, die den von der Kamera erfassten Winkelbereich anzeigt, **dadurch gekennzeichnet, dass** die wenigstens eine Markierung (45) als versenkte Stelle im Gehäuse (10) des Telekommunikationsendgeräts ausgebildet ist und in ihrer Position und Form derart gestaltet ist, dass sie nur von Punkten in einem bestimmten Winkelbereich (41) zur Kamera aus einsehbar ist, wobei sich die Markierung (45) in einem Versenkungskanal (40) im Gehäuse (10) des Telekommunikationsendgeräts befindet, der sich zur Markierung hin verjüngt, wobei die verjüngende Form des Versenkungskanals (40) den bestimmten Winkelbereich (41) definiert.

2. Telekommunikationsendgerät (1) nach Anspruch 1, **dadurch gekennzeichnet, daß** die Stelle (45) farblich abgesetzt oder selbstleuchtend vorgesehen ist.

3. Telekommunikationsendgerät (1) nach einem der vorhergehenden Ansprüche, **dadurch gekennzeichnet, daß** die wenigstens eine Markierung (45) anzeigt, wo sich der von der Kamera erfaßte Winkelbereich (31) befindet.

4. Telekommunikationsendgerät (1) nach einem der vorhergehenden Ansprüche, **dadurch gekennzeichnet, daß** mehrere Markierungen (45, 46) vorgesehen sind.

## Claims

1. Telecommunications terminal having a camera, which comprises at least one marking which indicates the angle range covered by the camera, **characterized in that** the at least one marking (45) is in the form of a recessed point in the housing (10) of the telecommunications terminal, and its position and shape are designed in such a way that it can be seen only from points in a specific angle range (41) with respect to the camera, with the marking (45) being located in a recessed channel (40) in the housing (10) of the telecommunications terminal, which recessed channel (40) tapers towards the markings, with the tapering shape of the recess channel (40) defining the specific angle range (41).

2. Telecommunications terminal (1) according to Claim 1, **characterized in that** the point (45) is provided in a contrasting colour or is self-luminous.

3. Telecommunications terminal (1) according to one of the preceding claims, **characterized in that** the at least one marking (45) indicates where the angle range (31) covered by the camera is located.

4. Telecommunications terminal (1) according to one of the preceding claims, **characterized in that** a plurality of markings (45, 46) are provided.

## Revendications

1. Terminal de télécommunication muni d'une caméra qui comprend au moins un marquage qui indique la zone d'angle couverte par la caméra,
**caractérisé en ce que**
ce marquage (45) est constitué comme un emplacement noyé dans le boîtier (10) du terminal de télécommunications et présente une position et une forme telles qu'il ne peut être vu qu'à partir de points dans une certaine zone d'angle (41) par rapport à la caméra, le marquage (45) se trouvant dans le boîtier (10) du terminal de télécommunication dans un canal d'immersion (40) qui se rétrécit en direction du marquage, la forme rétrécie du canal d'immersion (40) définissant la zone d'angle (41) particulière.

2. Terminal de télécommunication (1) selon la revendication 1,
**caractérisé en ce que**
l'emplacement du marquage coloré ou autoéclairant (45) est marqué par une couleur différente ou est conçu.

3. Terminal de télécommunication (1) selon l'une des revendications précédentes,
**caractérisé en ce que**
le marquage (45) indique où se trouve la zone d'angle (31) couverte par la caméra.

4. Terminal de télécommunication (1) selon l'une des revendications précédentes,
**caractérisé par**
plusieurs marquages (45, 46).
